# EUROPÄISCHE PATENTANMELDUNG

(11) **EP 0 532 977 A2**
(43) Veröffentlichungstag der Anmeldung: **24.03.1993**
(21) Anmeldenummer: 92114948.0
(22) Anmeldetag: 02.09.1992
(51) Int. Cl.: G01S 17/74, G01S 17/66, G01S 3/786, F41G 7/26, F41G 7/30

(54) **Flugkörperortungssystem**

(30) Priorität: 14.09.1991 DE 4130617
(71) Anmelder: Deutsche Aerospace AG, D-81663 München (DE)
(72) Erfinder: Riedl, Günther, W-8195 Egling (DE); Kaltenecker, Anton, W-8000 München 80 (DE)

(57) **Zusammenfassung**

Die Erfindung bezieht sich auf ein Flugkörperortungssystem, das sich aus einem optronisch gelenkten Flugkörper mit einem Leuchtsatz und einer Bodenanlage mit einem Ortungsgerät und einem LaserKommandosender zusammensetzt, wobei die Nachteile des Standes der Technik in Bezug auf die Störfestigkeit und die Reichweite durch spezielle Kombination eines langwelligen, schnell codierten Laserleuchtsatzes mit einem Laser-Kommandosender beseitigt werden. Ein Ausführungsbeispiel ist erläutert.

## Beschreibung

Die Erfindung bezieht sich auf ein Flugkörperortungssystem gemäß dem Oberbegriff des Anspruchs 1.

Flugkörperortungssysteme sind in den verschiedensten Ausführungsformen auch durch die Anmelderin bekanntgeworden. Hierbei werden als Leuchtsätze für optronisch gelenkte Flugkörper FK vorzugsweise entweder unmodulierte Leuchtsätze, wie beispielsweise pyrotechnische Leuchtsätze, Lampen, CW-Laser oder langsam modulierte Glühstrahler mit mechanischem Modulator oder ähnliche Konzeptionen verwendet oder es werden schnell modulierte Leuchtsätze bei kurzen Wellenlängen - also Diodenlaser, Xenonblitzlampen etc. - eingesetzt.

Der Nachteil der unmodulierten Leuchtsätze ist in der Schwierigkeit zu sehen, die damit ausgerüsteten Ortungsanlagen störfest zu bekommen. Der neuere Stand der Technik erzielt einen gewissen Fortschritt dadurch, daß eine langsame Modulation durchgeführt wird. Der dadurch erzielte Grad der Störfestigkeit ist jedoch bei weitem noch nicht zufriedenstellend.

Nun ist gefunden worden, daß sich die Störfestigkeit mit schnell modulierten Leuchtsätzen und geeigneter Codierung erreichen läßt. Als Nachteil stellte sich heraus, daß derartige Leuchtsätze nur im nahen IR-Bereich oder im sichtbaren Bereich einsetzbar sind, und somit die Reichweite infolge der atmosphärischen Dämpfung erheblich eingeschränkt ist. Weiterhin wird die Reichweite dadurch beeinträchtigt, daß die Notwendigkeit besteht, mit dem Leuchtsatz einen großen Winkel bereich auszuleuchten, um bei FK-Winkelbewegungen sicherzustellen, daß die Ortungsanlage vom Leuchtsatz beleuchtet wird.

Der Erfindung liegt die Aufgabe zugrunde, ein Flugkörperortungssystem der eingangs genannten Art zu schaffen, das frei der vorgenannten Nachteile des Standes der Technik ist, so daß eine störungsfreie Ortung über eine große Reichweite erzielt wird.

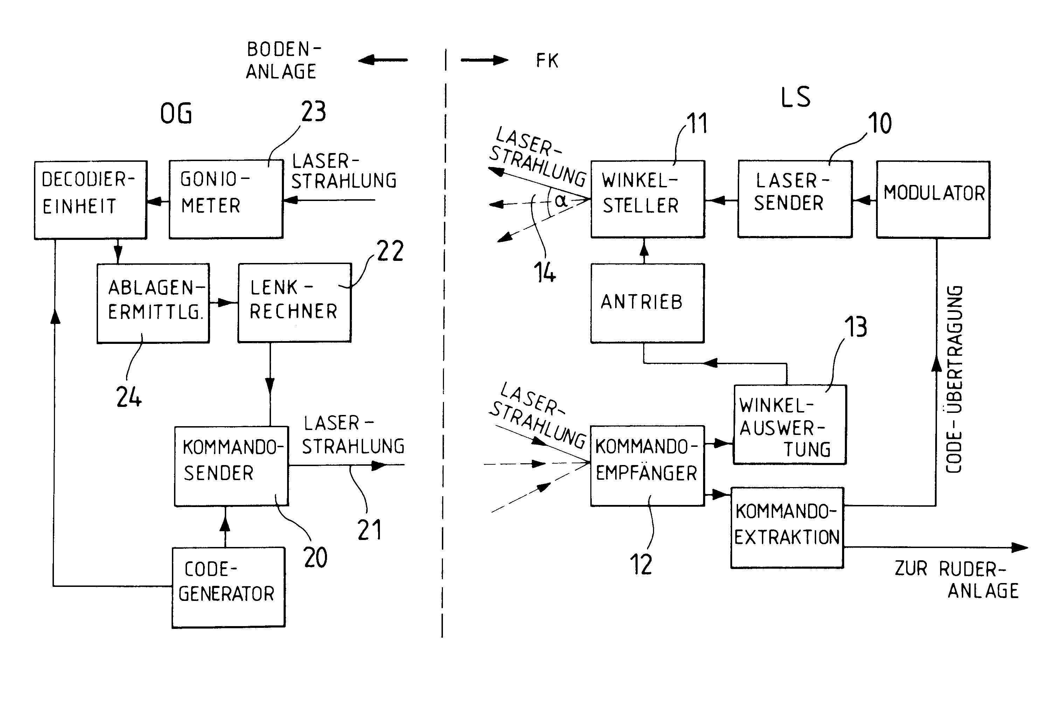

Diese Aufgabe wird durch die im Anspruch 1 aufgezeigten Maßnahmen gelöst. In den Unteransprüchen sind Ausgestaltungen und Weiterbildungen angegeben, und in der nachfolgenden Beschreibung sind Ausführungsbeispiele beschrieben. Die einzige Figur der Zeichnung zeigt ein Blockschaltbild eines Ausführungsbeispiels des Flugkörper-Ortungssystems.

Das in der Figur der Zeichnung skizzierte Ausführungsbeispiel zeigt eine geeignete Kombination eines langwelligen, schnell codierten Laserleuchtsatzes LS mit einem Laserkommandosender des Ortungsgerätes OG der Bodenanlage. Hierbei ist im Heck des Flugkörpers FK der vorgenannte schnell codierte Laserleuchtsatz LS angebracht, dessen Abstrahlwinkel a relativ zur Flugkörper-Längsachse mit optischen Mitteln - beispielsweise ein im Durchmesser nur wenige Millimeter starkes Drehkeilpaar - so schnell zu verändern ist, daß die Laserstrahlung den Empfänger der Bodenanlage auch bei den schnellsten FK-Bewegungen stets beleuchtet.

Der Winkel bereich, den der Laserleuchtsatz LS dazu ausleuchtet, kann bis auf die Toleranz der Abstrahlnachführung eingeengt werden - beispielsweise auf 1 ° , so daß hohe Leistungsdichten und damit große Reichweiten mit relativ geringen Laserleistungen (im Bereich von 4 W) erreicht werden. Nun muß ja zur Nachführung des Abstrahlkonus die Winkelinformation zuerst gewonnen werden. Dies geschieht dadurch, daß als Kommandosender ein Lasersender 20 verwendet wird, der aufgrund der im Ortungsgerät OG ermittelten Koordinaten dem Flugkörper FK nachgeführt wird.

Der Leuchtsatz LS setzt sich aus einer Leuchtsatz-Baugruppe und einer Kommandoempfänger-Einheit zusammen, wobei beide Teile zu einer starren, achsharmonisierten Baueinheit zusammengesetzt sind und so die Parallelität der beiden optischen Achsen gewährleistet ist. Der Kommandoempfänger 12 ist mit einem positionsgebenden Detektor ausgestattet. Die Auswertung der Detektorsignale ergibt die Richtung von Flugkörper FK zu Ortungsgerät OG, die zur Nachführung des Leuchtsatz-Abstrahlkonus verwendet wird.

Die Ermittlung der Flugkörper-Koordinaten in dem Ortungsgerät OG erfolgt auf ähnliche Weise wie die vorbeschriebene Ermittlung der Richtung FK zu OG, und zwar im Goniometer 23 mit einem positionsgebenden Detektor. Neben klassischen Modulationsscheiben-Goniometern ist auch der Einsatz von Quadranten- oder Lateraleffekt-Detektoren gegeben. Vorteilhaft gegenüber bilderzeugenden Goniometern ist, daß die Beugung am Eintrittsobjektiv für die erreichbare Genauigkeit keine große Rolle spielt, so daß besonders im langwelligen IR-Bereich Vorteile hinsichtlich der Baugrößen und im Kostenaufwand und damit der Wirtschaftlichkeit erzielt werden.

Für den Nahbereich unmittelbar nach dem Start kann es nötig sein, die Strahlnachführung außer Betrieb zu setzen und den LS-Konus 14 auf einen größeren Winkel a aufzuweiten. Wegen der kurzen atmosphärischen Strecke ist hier der Nachteil der geringen Leistungsdichte nicht so schwerwiegend.

Das zur Aufweitung benötigte optische Element - im Ausführungsbeispiel im Abstrahl-Winkelsteller 11 enthalten - ist ein im Durchmesser nur wenige Millimeter starkes Prisma, das zeitgesteuert, beispielsweise mit Federzug, aus dem Strahlengang gezogen wird, worauf die Strahlnachführung in Betrieb genommen wird. Die Strahlnachführung wird von Winkelsteller 11 z.B. mit einem kleinen Drehkeilpaar vorgenommen.

Weiterhin wird vorgeschlagen, daß zur Verbesserung der Störfestigkeit der Code für die Modulation in dem Ortungsgerät OG der Bodenanlage erzeugt und variiert und dem Flugkörper FK über die Kommandostrecke übermittelt wird. Die Zusammensetzung und Funktion des vorgeschlagenen Flugkörperortungssystems dürfte zweifelsfrei aus der Figur der Zeichnung hervorgehen, so daß hierzu keine weiteren Erläuterungen mehr erforderlich erscheinen. Mit 13 ist die Winkelauswerteinheit der Kommandoempfängereinheit im LS bezeichnet, mit 10 der Lasersender der Leuchtsatz-Baugruppe, mit 20 der Kommando-Lasersender der Bodenanlage, mit 22 der Lenkrechner im OG und mit 24 die Einheit zur Ablagenermittlung im OG.

## Patentansprüche

1. Flugkörperortungssystem, das sich aus einem optronisch gelenkten Flugkörper FK mit einem Leuchtsatz LS und einer Bodenanlage mit einem Ortungsgerät OG und einem Laser-Kommandosender 20 zusammensetzt, dadurch gekennzeichnet, daß der Leuchtsatz LS des Flugkörpers FK aus einem langwelligen, schnellcodierbaren Lasersender (10) mit einem Abstrahl-Winkelsteller (11) und einem Kommando-Strahlempfänger (12) besteht, der mit einem nachführbaren Laser-Kommandosender (20) des Ortungsgerätes OG der Bodenanlage korrespondiert, dessen Laserstrahlung (21) zur Nachführung des Leuchtstrahlkonus gemäß der Auswertung einer Winkelauswerteeinrichtung (13) und eines Lenkrechners (22) dient.

2. Ortungssystem nach Anspruch 1, dadurch gekennzeichnet, daß der Kommandoempfänger (12) mit einem positionsempfindlichen Detektor - wie beispielsweise Lateral-Effekt-Detektor - versehen ist.

3. Ortungssystem nach Anspruch 1 oder 2, dadurch gekennzeichnet, daß die Leuchtsatz-baugruppe und die Kommandoempfänger-Einheit zu einer mechanisch starren, achsharmonisierten Baueinheit zusammengefaßt sind und den Flugkörper-Leuchtsatz LS bilden.

4. Ortungssystem nach den Ansprüchen 1 bis 3, dadurch gekennzeichnet, daß der Abstrahl-Winkelsteller (11) des Leuchtsatz-Lasersenders (10) ein Drehkeilpaar ist.

5. Ortungssystem nach den Ansprüchen 1 bis 4, dadurch gekennzeichnet, daß dem Ortungsgerät OG der Bodenanlage ein Lenkrechner (22) zugeordnet ist, dessen Ausgangs-Signale die Flugkörper-Koordinaten zur FK-Nachsteuerung bilden und aus den Signalen eines Goniometers (23) und einer Ablagenermittlungseinheit (24) resultieren.

6. Ortungssystem nach einem der Ansprüche 1 bis 5, dadurch gekennzeichnet, daß als Goniometer (23) Modulationsscheiben-Goniometer, Quadranten- oder Lateraleffekt-Detektoren verwendet werden.

7. Ortungssystem nach einem der Ansprüche 1 bis 6, dadurch gekennzeichnet, daß die Strahlnachführung erst nach bestimmter, einstellbarer Zeit nach erfolgtem FK-Start aktiviert wird und vorher automatisch eine Aufweitung des Leuchtsatzkonus erfolgt.

8. Ortungssystem nach Anspruch 7, dadurch gekennzeichnet, daß das optische Element zur Strahlaufweitung mittels eines Federelementes aus dem Strahlengang gezogen wird und bei Anschlag automatisch die Strahlnachführung aktiviert wird.

9. Ortungsanlage nach einem der Ansprüche 1 bis 8, dadurch gekennzeichnet, daß der Code für die Modulation des LS-Laserstrahls (14) im Ortungsgerät der Bodenanlage erzeugt und variiert wird und über den Kommandosender (2o) dem Leuchtsatz LS des Flugkörpers FK übertragen wird.
